# EUROPEAN PATENT APPLICATION

(11) **EP 1 335 569 A1**
(43) Date of publication of application: **13.08.2003**
(21) Application number: 01906309.8
(22) Date of filing: 26.02.2001
(51) Int. Cl.: H04M 3/42, H04M 3/53, H04M 1/64, H04Q 7/38

(54) **ANSWER-PHONE MESSAGE PROVIDING SYSTEM**

(30) Priority: 17.10.2000 JP 2000315994
(71) Applicant: DZZY Entertainment Inc., Tokyo 150-0011 (JP)
(72) Inventor: MURATA, Susumu, c/o Dzzy Entertainment Inc., Tokyo 150-0011 (JP)
(74) Representative: Leson, Thomas Johannes Alois, Dipl.-Ing.
(86) International application number: JP0101418
(87) International publication number: WO02033943

(57) **Abstract**

A system capable of providing messages for a guidance in a number of special expression forms to a telephone (11) on the calling side from a telephone (1) on the called side. A user of the present system is, in advance, able to select message data in an expression form of his (her) taste from a message data server (6) having message data in a number of special expression forms through an Internet (7). The selected message data is caused to correspond to the telephone (1) of the user to store it in an answering service center (4). Where receiving from the telephone (11) on the calling side to the telephone (1) is disabled, the guidance on the basis of the selected message data is provided from the answering service center (4) to the telephone (11) on the calling side.

## Description

### TECHNICAL FIELD

The present invention relates to an answer-phone (answering machine) message providing system capable of, where receiving to a telephone on the called side is disabled or the like, providing a message for guidance in a special expression form to a telephone on the calling side.

### BACKGROUND

In the conventional answer-phone responding service, where receiving to a telephone on the called side is disabled, because of, for example, such a matter that when call is received by a portable telephone, the portable telephone on the called side is in Line, busy, or is outside a receiving area, or a power supply switch is turned off, an answering service center provided on a telephone network announces a guidance, for example, "I am out now. Please speak your message, if any.", and thereafter records a message (voice mail) of a calling person in a recording medium.

Further, after the message has been recorded, the answering service center reproduces the message, in response to a request from a called person made through the portable telephone on the called side, to transmit it to the portable telephone on the called side. Accordingly, an owner of the portable telephone on the called side is able to listen to the content of the message. Such a guidance or responding service of the answer-phone as described is normally provided as one of service businesses to a user by a telephone enterpriser.

However, in the aforementioned conventional answer-phone responding service, since only a guidance of fixed contents provided by the telephone enterpriser or an extremely ordinary voice message by way of a voice of a called person is used, the purpose for urging a calling person to record the message can be achieved, but there is not characteristic in the contents of guidance or a voice expression, thus posing a problem of lacking in discrimination from other guidance or voice messages.

It is therefore an object of the present invention to provide an answer-phone message providing system in which a guidance issued in order to urge a calling person to record a message is provided in an expression form selected in advance by a called person out of a number of special expression forms whereby interest is added to the guidance, and a noticeable discrimination can be imparted to other voice messages or the like.

A further object of the present invention is to provide a message data server, an answering service center, and a telephone, which are suitable for use with the answer-phone message providing system.

### DISCLOSURE OF THE INVENTION

An answer-phone message providing system according to the present invention comprises a telephone connectable to an Internet through an exchange; a message data server connected to said Internet and having message data in a number of special expression forms for guidance; and an answering service center connected to said exchange and causing message data selected from said message data server through said Internet to correspond to said telephone to enable setting and registering it, And, where receiving from a telephone on the calling side to said telephone is disabled, a guidance on the basis of said selected message data is provided from said answering service center to said telephone on the calling side. Thereby, interest according to a user is added to the guidance, and a difference from the other voice messages becomes clear.

An answer-phone message providing system according to a further embodiment comprises a telephone connectable to an Internet through an exchange; a message data server connected to said Internet and having message data in a number of special expression forms for guidance; and an answering message memory provided on said telephone, which is able to store message data selected from said message data server through said Internet. And, where receiving from a telephone on the calling side to said telephone is disabled, a guidance on the basis of said selected message data is provided from said answering message memory to said telephone on the calling side. According to the present embodiment, it is possible to provide the guidance on the basis of the selected message data to the telephone on the calling side not through the answering service center. Whereby, the service according to the present system can be received at lost and quickly.

According to the present invention, there is provided a message data server connected to an Internet, which has message data in a number of special expression forms for an answer-phone guidance, and in which selected message data is supplied to an answering service center connected to an exchange through the telephone connected to said Internet in response to selection from a telephone.

According to one embodiment of the present invention, there is provided a message data server connected to an Internet, comprising: storage means for storing message data in a number of special expression forms for an answer-phone guidance; and a download request receiving/responding portion for transmitting selected message data to an answering service center connected to a telephone through the telephone connected to said Internet in response to selection of a telephone.

The message data server according to another embodiment of the present invention is a message data server connected to an Internet, which has message data in a number of special expression forms for an answer-phone guidance, message data selected according to selection from a telephone being supplied to the telephone.

The message data server according to still another embodiment of the present invention is a message data server connected to an Internet, comprising: storage means for storing message data in a number of special expression forms for an answer-phone guidance; and a download request receiving/responding portion for transmitting selected message data selected according to selection from a telephone to the telephone.

According to the present invention, there is provided an answering service center connected to an Internet through an exchange, wherein suitable message data selected using a telephone from a message data server connected to said Internet and having message data in a number of special expression forms for an answer-phone guidance is caused to correspond to said telephone to enable storing it.

According to one embodiment of the present invention, there is provided an answering service center connected to an Internet through an exchange, comprising: means wherein suitable message data selected using a telephone from a message data server connected to said Internet and having message data in a number of special expression forms for an answer-phone guidance is caused to correspond to said telephone to store it.

According to the present invention, there is provided a telephone connectable to an Internet through an exchange, comprising: selection means for selecting suitable message data, through said Internet, from a message data server having message data in a number of special expression forms for an answer-phone guidance; and a download request portion for requesting said message data server so as to download message data selected by said selection means to an answering service center connected to said Internet.

According to another embodiment of the present invention, there is provided a telephone connectable to an Internet capable of storing suitable message data selected through said Internet from a message data server having message data in a number of special expression forms for an answer-phone guidance.

According to still another embodiment of the present invention, there is provided a telephone connectable to an Internet, comprising: selection means for selecting suitable message data selected through said Internet from a message data server having message data in a number of special expression forms for an answer-phone guidance; download request portion for requesting said message data server so as to download message data selected by said selection means to said telephone; and storage means for storing said selected message data supplied from said message data server in response to a request from said download request portion.

### BRIEF DESCRIPTION OF THE DRAWINGS

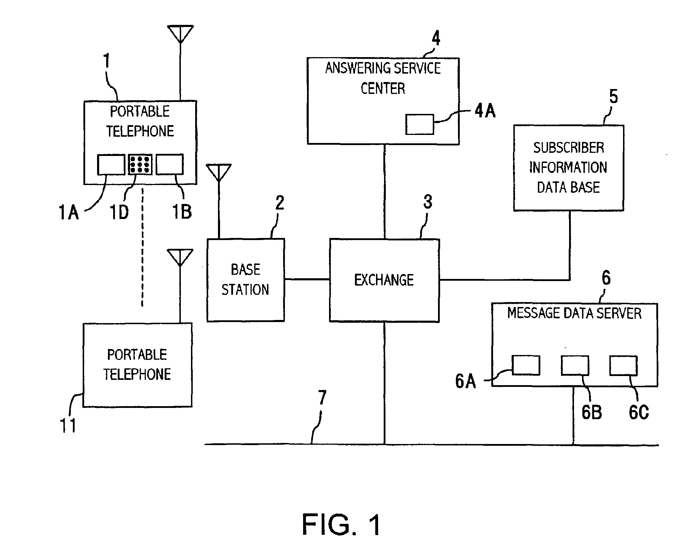

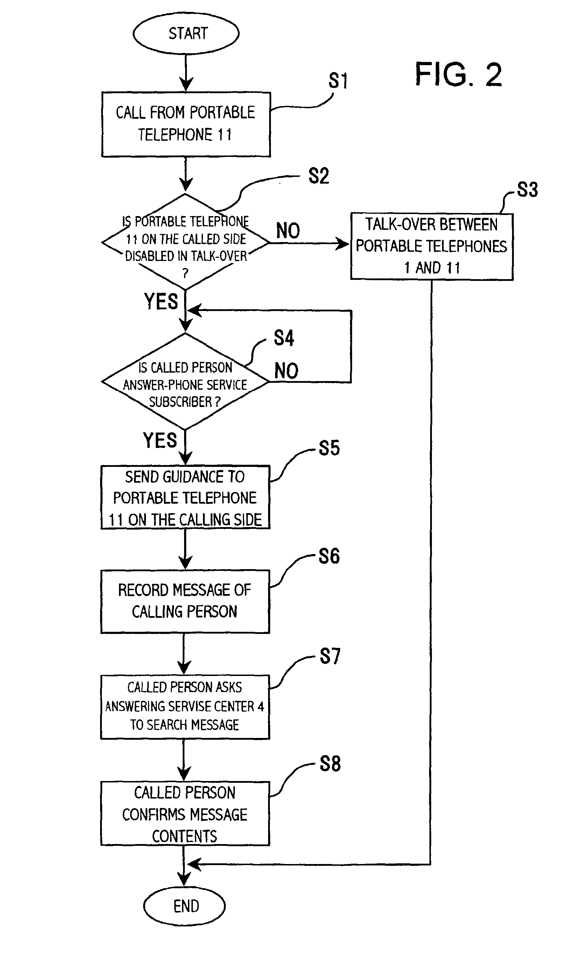

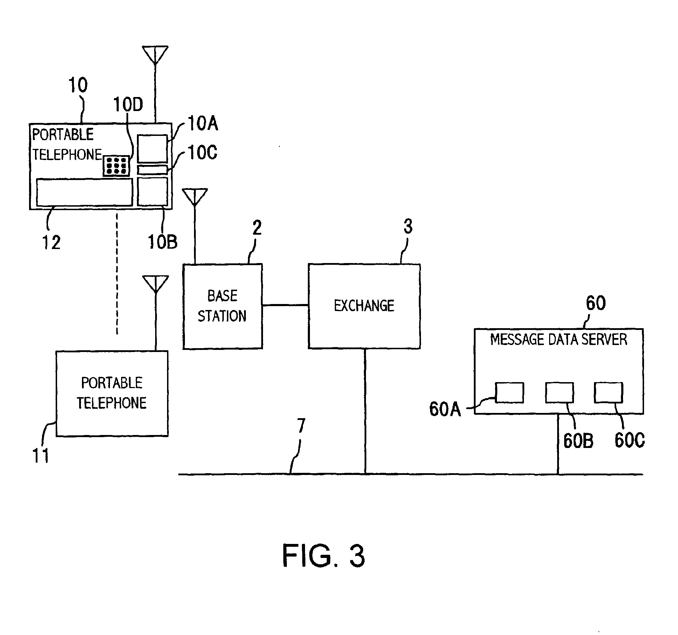

FIG. 1 is a block diagram showing an answer-phone message providing system according to an embodiment of the present invention; FIG. 2 is a flowchart showing a providing process of a guidance message according to the system shown in FIG. 1; and FIG. 3 is a block diagram showing an answer-phone message providing system according to a further embodiment of the present invention.

### BEST MODE FOR CARRYING OUT THE INVENTION

In FIG. 1, the answer-phone message providing system according to a embodiment comprises a portable telephone 1 as one example of a telephone on a called side, a base station 2, a telephone exchange connected to the base station 2, an answering service center 4 connected to the exchange 3, a subscriber information database 5, and a message data server 6 connected to the exchange 3 through an Internet 7.

The portable telephone 1 on the called side, that is, the portable telephone 1 subscribed for the present system can be connected to the Internet 7 through the exchange 3. The portable telephone 1 on the called side is provided, in addition to a key 1D as an input device and a liquid crystal display panel not shown as a display device, with a memory 1A for storing a transfer program for transferring a program with the exchange 3, a download request portion 1B for requesting the message data server 6 to transfer message data selected using the portable telephone 1 on the called side to the answering service center 4, and so on.

The message data server 6 stores a number of message data in a special expression form for guidance, and provides the selected message data in a special expression form to the answering service center 4 through the Internet 4 according to the selection from the portable telephone 1 on the called side. The message in a special expression form for guidance mentioned here is that messages of various contents, for example, such as "I am out now. Please speak your message, if any." are expressed in a voice, for example, of "DORAEMON" (a comic character) which is eminent in a television animation or the like, or in various voices such as characteristic voices of a number of public entertainers, and a background voice can be also included if necessary.

The message data server 6 is provided with a memory 6A for storing a transfer program for carrying out transferring of a program with the exchange 3, a disk device 6B as message data storing means in which message data in a number of special expression forms are stored, and a download request receiving/responding portion 6C which receives and responds to a download request issued from the download requesting portion 1B of the portable telephone 1 on the called side.

The answering service center 4 a voice storage portion 4A as message data storage means. When a called person selects message data for guidance in an expression form of his or her taste from the message data server 6 through the Internet 7 by the portable telephone 1 on the called side, the answering service center 4 stores (downloads) the selected message data in the voice storage portion 4A corresponding to a telephone number of the portable telephone 1 on the called side. The answering service center 4 further stores a response message by a voice which is returned by a calling person in accordance with the stored data for guidance in the voice storage portion 4A by digital recording. The response message stored in the voice storage portion 4A can be taken out through the exchange 3 by the portable telephone 1 on the called side.

The subscriber information database 5 holds information of a subscriber in the answer-phone message providing system according to the present embodiment (a called person capable of receiving the answering service by the present system).

Next, the answering message providing system will be described hereinafter with reference to a flowchart shown in FIG. 2.

First, the subscriber of the present system operates the key 1D as selection means of the portable telephone 1 on the called side to select data for guidance of his (her) taste out of message data in a number of special expression forms stored in advance in the message data server 6 through the Internet 7 to download it in the voice storage portion 4 of the answering service center 4. The download is executed in accordance with the process of the transfer program within the memory 6A through the download request receiving/responding portion 6C of the message data server 6 by instructions from the download request portion 1B of the probable telephone 1 on the called side.

In FIG. 2, when the calling person inputs a telephone number of the portable telephone 1 on the called side in a portable telephone 11 as a telephone on the calling side to carry out a transmission operation (Step S1), the portable telephone 11 on the called side is connected to the base station 2. The exchange 3 calls the portable telephone 1 on the called side on the basis of the telephone number designated through the base station 2 by the portable telephone 11 on the called side. Where the called person carries out necessary receiving operation in response to the call to enable the portable telephone 1 on the called side to talk over (Step S2), the exchange 3 connects a communication line between the portable telephone 11 on the calling side and the portable telephone 1 on the called side so as to get ready for talk over (Step S3).

On the other hand, receiving to the portable telephone 1 on the called side becomes disabled for reasons of that the portable telephone 1 on the called side is in a condition of Line, busy, or outside the receiving area, or a power supply switch of the portable telephone 1 on the called side is turned off, the talk over between the portable telephones 1 and 11 becomes disabled (Step S2). Then, the exchange 3 which detected the disablement of talk over searches the subscriber data base 5 to confirm whether the portable telephone 1 on the called side is a subscriber of the present system (Step S4). And, where the fact that the portable telephone 1 on the called side is a subscriber of the present system has been confirmed, the exchange 3 transmits a message, for example, such as "I am out now. Please speak your message, if any." as guidance to the portable telephone 11 on the calling side from the answering service center 4 (Step S5). Since this guidance is in a special expression form described above which is downloaded in advance by the selection of the called person from the message data server 6, a good impression is made on the calling person as compared with the message in a conventional uninteresting expression form, and discrimination from a message for the other guidance is facilitated.

Successively, when the calling person speaks a message from the portable telephone 11 on the calling side, the message is stored by digital recording in the voice storage portion 4 of the answering service center 4 through the exchange 3 (Step S6). Accordingly, thereafter, the called person gets access to the answering service center 4 through the exchange 3 from the portable telephone 1 on the called side (Step S7) to search the message of the voice storage portion 4A to enable listening to the message from the calling person addressed to himself (herself) (Step S8).

Now, another embodiment of the present invention will be described with reference to FIG. 3. In FIG. 3, the same elements as those of FIG. 1 are indicated by the same reference numerals as those of the former.

In FIG. 3, the answer-phone message providing system according to the present embodiment comprises a portable telephone 10 as one example of a telephone on a called side, a base station 2, an exchange 3 connected to the base station 2, and a message data server 60 connected to the exchange 3 through an Internet 7. In the present embodiment, the portable telephone 10 itself on the called side has an answering message memory 12 as message data control means.

The portable telephone 10 on the called side can be connected to the Internet 7 through the exchange 3. The portable telephone 10 on the called side is provided, in addition to a key 10D as an input device and a liquid crystal display panel not shown as a display device, with a memory 10A for storing a transfer program for transferring a program to the exchange 3, and a download request portion 10B for requesting the message data server 60 to send message data in a special expression form selected using the portable telephone 10 on the called side to the answering message memory 12 of the portable telephone 10 on the called side.

The message data server 60 stores message data in a number of special expression forms for guidance, and provides, in response to selection from the portable telephone 10 on the called side, the selected message data in a special expression form to the portable telephone 10 on the called side through the Internet 7. The meaning of "message data in a number of special expression forms for guidance" is the same as that of the embodiment of FIG. 1.

The message data server 60 is provided with a memory 60A for storing a transfer program for transferring a program to the exchange 3, a disk device 60B as the message data storage means for storing message data in a special voice described above, and a download request receiving/responding portion 60C for receiving a download request issued from the download request portion 10B of the portable telephone 10 on the called side to respond to the request.

When a called person operates the key 10D of the portable telephone 10 on the called side to select message data for guidance in an expression form of his (her) taste from the message data server 60 through the Internet 7, the portable telephone 10 on the called side stores (downloads) the selected message data in the answering message memory 12. That is, the message data selected by the portable telephone 10 on the called side is downloaded in the answering message memory 12 of the portable telephone 10 on the called side through the Internet 7 from the disk device 60B of the message data server 60 in accordance with the transfer program stored in the memory 60A of the message data server 60 in response to the request from the download request portion 10B.

Accordingly, in the present embodiment, the selected guidance in a special expression form is transmitted to the portable telephone 11 as a telephone on the calling side from the answering message memory 12 within the portable telephone 10 on the called side not from the answering service center 4 managed by a telephone company. Because of this, even if not being subscribed in a contract of the answering service of a communication company, the message data in a special expression form can be directly obtained from the message server 60 to transmit it to the portable telephone 11 on the calling side. Thereby, the service provided by the present system can be received at low cost and quickly.

In the case of the system according to the present embodiment, a message from a calling person is digital-recorded in the message memory 10C provided separately on the portable telephone 10 on the called side.

### INDUSTRIAL APPLICABILITY

As described above, the answer-phone message providing system according to the present invention is suitable for use with communication by a portable telephone which becomes disablement of talk-over when a power supply is turned off or the telephone is outside an area where talk-over is enabled.

## Claims

1. An answer-phone message providing system, comprising:
a telephone (1) connectable to an Internet (7) through an exchange (3);
a message data server (6) connected to said Internet (7) and having message data in a number of special expression forms for guidance; and
an answering service center (4) connected to said exchange (3) and causing message data selected from said message data server (6) through said Internet (7) to correspond to said telephone (1) to enable setting and registering it,
**characterized in that** where receiving from a telephone (11) on the calling side to said telephone (1) is disabled, a guidance on the basis of said selected message data is provided from said answering service center (4) to said telephone (11) on the calling side.

2. An answer-phone message providing system, comprising:
a telephone (10) connectable to an Internet (7) through an exchange (3);
a message data server (60) connected to said Internet (7) and having message data in a number of special expression forms for guidance; and
an answering message memory (12) provided on said telephone (10), which is able to store message data selected from said message data server (60) through said Internet (7),
**characterized in that** where receiving from a telephone (11) on the calling side to said telephone (10) is disabled, a guidance on the basis of said selected message data is provided from said answering message memory (12) to said telephone (10) on the calling side.

3. A message data server (6) connected to an Internet (7), which has message data in a number of special expression forms for an answer-phone guidance, and in which selected message data is supplied to an answering service center (4) connected to an exchange (3) through the telephone (3) connected to said Internet (7) in response to selection from a telephone (1).

4. A message data server (6) connected to an Internet (7), comprising:
storage means (6B) for storing message data in a number of special expression forms for an answer-phone guidance; and
a download request receiving/responding portion (6C) for transmitting selected message data to an answering service center (4) connected to a telephone (3) through the telephone (3) connected to said Internet (7) in response to selection of a telephone (1).

5. A message data server (60) connected to an Internet (7), which has message data in a number of special expression forms for an answer-phone guidance, and in which message data selected in response to selection from a telephone (10) is supplied to said telephone (10).

6. A message data server (60) connected to an Internet (7), comprising:
storage means (60B) for storing message data in a number of special expression forms for an answer-phone guidance; and
a download request receiving/responding portion (60C) for transmitting message data selected in response to selection from a telephone (10) to said telephone (10).

7. An answering service center (4) connected to an Internet (7) through an exchange (3), wherein suitable message data selected using a telephone (1) from a message data server (6) connected to said Internet (7) and having message data in a number of special expression forms for an answer-phone guidance is caused to correspond to said telephone (1) to enable storing it.

8. An answering service center (4) connected to an Internet (7) exchange (3), comprising: means (4A) wherein suitable message data selected using a telephone (1) from a message data server (6) connected to said Internet (7) and having message data in a number of special expression forms for an answer-phone guidance is caused to correspond to said telephone (1) to store it.

9. A telephone (1) connectable to an Internet (7), comprising:
selection means (1D) for selecting suitable message data, through said Internet (7), from a message data server (6) having message data in a number of special expression forms for an answer-phone guidance; and
a download request portion (1B) for requesting said message data server (6) so as to download message data selected by said selection means (1D) to an answering service center (4) connected to said internet (7).

10. A telephone (10) connectable to an Internet (7) capable of storing suitable message data selected through said Internet (7) from a message data server (60) having message data in a number of special expression forms for an answer-phone guidance.

11. A telephone (10) connectable to an Internet (7), comprising:
selection means (10D) for selecting suitable message data selected through said Internet (7) from a message data server (60) having message data in a number of special expression forms for an answer-phone guidance;
download request portion (10B) for requesting said message data server (60) so as to download message data selected by said selection means (10D) to said telephone (10); and
storage means (12) for storing said selected message data supplied from said message data server (60) in response to a request from said download request portion (10B).
